# FASCICULE DE BREVET EUROPEEN

(11) **EP 2 035 766 B1**
(45) Date de publication et mention de la délivrance du brevet: **23.01.2019**
(21) Numéro de dépôt: 07803823.9
(22) Date de dépôt: 02.07.2007
(51) Int. Cl.: F28G 7/00, F28C 1/00

(54) **PROCEDE ET DISPOSITIF DE NETTOYAGE DES SURFACES DE RUISSELLEMENT D'EAU DANS UN ECHANGEUR THERMIQUE AIR/EAU**
VERFAHREN UND VORRICHTUNG ZUR REINIGUNG DER WASSERRIESELUNGSFLÄCHE IN EINEM WÄRMETAUSCHER LUFT/WASSER
METHOD AND DEVICE FOR CLEANING THE WATER TRICKLING SURFACES IN AN AIR/WATER HEAT EXCHANGER

(30) Priorité: 03.07.2006 FR 0605983
(43) Date de publication de la demande: 18.03.2009
(73) Titulaire: DYANERGIE, 75003 Paris (FR)
(72) Inventeur: GOMEZ, Rémi, 75005 Paris (FR); LAURENT, Nicolas, 51460 Poix (FR); DEGRANGE, Michel, 75012 Paris (FR); MEURVILLE, Jean-Marc, 89100 Nailly (FR); BLOKBERGEN, Paule, 63100 Clermont-ferrand (FR)
(74) Mandataire: Robert, Jean-Pierre
(86) Numéro de dépôt international: PCT/FR2007/001114
(87) Numéro de publication internationale: WO 2008/003851

(56) Documents cités:
- EP-A- 0 410 867
- EP-A- 1 162 406
- EP-A1- 0 458 533
- WO-A-01/78912
- WO-A-96/11755
- BE-A- 348 055
- US-A- 4 089 702
- US-A- 4 461 651
- US-A1- 2002 196 891
- US-A1- 2005 217 702

## Description

La présente invention concerne un procédé et un dispositif de nettoyage des surfaces de ruissellement d'eau dans un échangeur thermique air/eau, comme celles présentes par exemple dans une tour de réfrigération au niveau des « packings » latéraux ou horizontaux ou au niveau des séparateurs de

Les caractéristiques du préambule de la revendication 1 sont divulguées dans document US 4 461 651.

### ARRIERE PLAN DE L'INVENTION

Dans les tours de réfrigération, le refroidissement de l'eau d'un circuit secondaire de condensation par exemple est réalisé principalement par la vaporisation d'une fraction de l'eau à refroidir qui ruisselle sur des surfaces prévues à cet effet et balayées par un courant d'air contraire au sens de ruissellement et secondairement lors de la convection qui se produit sur les surfaces d'échange dans l'eau elle-même.

Ces surfaces sont portées par un corps d'échange, communément appelé « packing », constitué par des feuilles notamment de PVC, qui sont assemblées les unes aux autres pour former une structure alvéolaire. Chaque alvéole de cette structure est en forme de tube d'environ 1,5 mètre de long, la dimension moyenne de sa section étant de l'ordre de quelques centimètres. La paroi des alvéoles est fine (quelques dixièmes de millimètres) et est percée de nombreux orifices.

Les corps d'échange sont suspendus dans la tour de réfrigération, entre une installation de dispersion de l'eau à refroidir et un bac inférieur de récupération de l'eau refroidie, des moyens de captage ou séparateurs de gouttes étant également disposés en partie supérieure de la tour pour retenir autant que faire se peut, les gouttelettes d'eau entraînées par l'air de refroidissement. Il est en effet important de ne pas rejeter dans l'atmosphère cette eau porteuse de germes ayant pu proliférer dans la tour où règne une température propre à cette prolifération.

Au cours de son utilisation, le corps d'échange et les séparateurs de gouttes se chargent d'un dépôt de sels minéraux du fait de l'évaporation qui se produit au niveau des surfaces de ruissellement. Ce dépôt croit avec le temps pour atteindre, dans le cas des packings, jusqu'à dix fois le poids du corps lui-même dans certaines installations. Ce dépôt présente de nombreux inconvénients : il est un obstacle au ruissellement donc à l'efficacité de l'échange thermique, il est un nid de rétention des différents germes de l'eau dans une ambiance propice à leur prolifération, il constitue une surcharge très importante pour la structure de soutien du corps d'échange qui en général est suspendu à l'intérieur de la tour....

Il existe, au moins en théorie, plusieurs moyens de remédier à cet inconvénient. L'un d'eux consiste à traiter chimiquement l'eau à refroidir pour la débarrasser de ses sels et ainsi éviter l'entartrage des surfaces d'échange. Ce procédé n'est pas envisageable dans les tours de refroidissement des centrales de production d'énergie électrique, thermiques ou nucléaires.

On peut également procéder à une dissolution chimique du tartre par des solutions appropriées. Cette manière de procéder, notamment décrite dans le document US 2002/196891, pose le délicat problème du traitement des effluents qui n'est pas sans incidence économique sur le coût de l'opération.

On peut enfin envisager un secouage du corps d'échange par tout moyen mécanique approprié ; cette méthode, divulguée notamment par le document WO 96/11755, risque de conduire à une dégradation du corps d'échange qui le rend pratiquement impropre à une utilisation ultérieure.

On peut enfin procéder au nettoyage mécanique de ce corps d'échange après son démontage, ce qui constitue une opération extrêmement coûteuse compte tenu de l'importance volumique de ce corps (10 à 12000 mètres cubes par unités de deux mètres cubes environ).

### OBJET DE L'INVENTION

On a donc recherché une solution permettant d'éviter les inconvénients des solutions existantes ou envisageables afin de nettoyer les corps d'échange mis en oeuvre dans les tours aéro-réfrigérantes des centrales de production électrique, en particulier des centrales nucléaires.

### RESUME DE L'INVENTION

A cet effet, l'invention a pour premier objet, un procédé de détartrage in-situ d'un corps d'échange présent dans une tour de réfrigération par voie humide (packing horizontal ou latéral) ou d'un séparateur de gouttes (sur les ailettes duquel il se produit nécessairement un entartrage), qui consiste à engendrer au moins un souffle d'air en grande quantité et à faible pression (de l'ordre de 2 à 12 bars par exemple) par un générateur mettant en oeuvre la détente d'une masse de gaz comprimée en direction d'une zone du corps d'échange ou des ailettes du séparateur de gouttes, pour créer un écoulement dans ce corps ou ce séparateur sensiblement parallèle aux surfaces des parois qui le constituent, le générateur étant ouvert à distance de cette zone et à répéter cette opération après avoir déplacé le générateur le long du corps d'échange ou du séparateur d'un pas déterminé.

Le souffle gazeux engendré par le générateur progresse à l'intérieur des alvéoles ou canaux du corps d'échange en provoquant à son passage une sorte de gonflage des canaux intérieurs à l'élément à détartrer donc une déformation élastique locale de la paroi de ces canaux d'amplitude suffisante pour que le tartre qui est dur et cassant se détache de la paroi. On a constaté, lors des essais, qu'il se forme un nuage de poussière latéralement à la paroi comme si les particules de tartre étaient brutalement écartées de la surface de celle-ci dans une direction normale à sa surface. La perte de charge de l'écoulement gazeux à l'intérieur de l'élément à nettoyer subit une perte de charge importante de sorte que le souffle progresse à l'intérieur du corps sur une profondeur correspondant à sensiblement la moitié de l'épaisseur totale de cet élément lorsque celui-ci est un corps d'échange, ce qui est intéressant car il s'agit spécifiquement de la partie du corps où les dépôts sont les plus importants. En effet, on présente le générateur du côté du corps d'échange correspondant à la sortie de l'eau de ruissellement. Dans le cas des séparateurs de gouttes, la longueur des canaux inter-lamellaires est faible et la perte de charge subie par l'écoulement tient essentiellement à la forme en chicane de ces canaux pour que les lames constituent des obstacles efficaces à piéger les gouttelettes entraînées par l'air de réfrigération. L'écoulement du gaz tend à entraîner, à l'intérieur des canaux, une partie au moins des particules détachées dont on constate qu'elles ont un effet abrasif augmentant le pouvoir de nettoyage du procédé. En fonction du rythme des « tirs » et de leur espacement le long de l'élément à nettoyer, on peut organiser une sorte de cyclage des particules détachées dans plusieurs écoulements successifs

Quand on sait que la section d'un tel corps d'échange peut atteindre plusieurs milliers de mètres carrés, on comprend qu'il est impossible de disposer d'un générateur de souffle qui puisse embrasser cette surface. Le procédé de l'invention consiste donc à traiter les corps en question zone après zone. Aussi consiste-t-il à déplacer le générateur en continu sous le corps d'échange et à engendrer une succession continue de souffles pendant le déplacement.

Afin d'améliorer l'efficacité du traitement, on peut procéder à une phase de réchauffage de la zone concernée de l'élément par un courant d'air chaud. En effet, comme les parois des canaux qui constituent l'élément sont en matière thermoplastique (typiquement en P.V.C.), le réchauffage tend à rendre ces parois plus souples donc d'accroître la différence de rigidité entre la paroi et le dépôt. On comprend qu'au passage du souffle la séparation de l'un avec l'autre se fasse, dans ces conditions, plus facilement.

Le second objet de l'invention est un dispositif pour mettre en oeuvre le procédé présenté ci-dessus tel que le générateur susdit comporte :
- une source de gaz comprimé,
- au moins un réservoir communiquant, en entrée, avec ladite source de gaz au travers d'une vanne à ouverture et fermeture commandées et, en sortie, avec l'atmosphère extérieure au travers du siège d'un clapet à ouverture et fermeture commandée et
- des moyens de commande de la vanne et du clapet pour isoler le réservoir de l'atmosphère extérieure lorsqu'il est en communication avec la source de gaz comprimé et pour l'isoler de la source lorsqu'il est ouvert sur l'atmosphère extérieure.

Dans un mode de réalisation spécialement adapté au détartrage des packings (horizontaux ou verticaux) dans lesquels les surfaces d'échange délimitent des canaux de faible section, le siège de sortie du réservoir de gaz est prolongé d'une tuyère de détente progressive du flux d'air.

La structure de ce dispositif permet d'obtenir une ouverture rapide de la communication du réservoir avec l'atmosphère extérieure donc d'obtenir une détente du gaz conduisant à la création d'un souffle puissant mais à faible pression (2 à 12 bars) qui se propage à partir de la sortie du réservoir ou de la tuyère lorsqu'il en est pourvu en direction de la face de l'élément le long de laquelle elle s'ouvre. On a constaté que le dispositif ne devait pas être immédiatement sous le corps mais à distance de celui-ci pour que le matériau des canaux ne soit pas détérioré par une surpression gazeuse trop forte et trop localisée. Cette distance est de l'ordre de quelques dizaines de centimètres (15 à 50 par exemple)

On a constaté en outre que pour le dispositif pourvu d'une tuyère, il était avantageux que l'extrémité libre de la tuyère soit située à l'intérieur d'un manchon cylindrique écarté radialement de cette extrémité. La sortie du gaz de la tuyère engendre une aspiration dans l'espace compris entre la paroi de la tuyère et le manchon et il se créée une sorte de gaine fluidique tubulaire qui contient le flux des gaz sortant dans une direction sensiblement dans l'axe des canaux. Cette gaine empêche le flux de gaz sortant de diverger et d'atteindre les parois des alvéoles sous un angle d'incidence tel que l'énergie cinétique de ce flux donnerait naissance à une pression sur ces parois les déformant jusqu'à l'écrasement. Ceci est surtout recherché dans le cas des stackings.

Dans un mode particulier de réalisation de ce dispositif, le clapet est monté à coulissement sur une tige fixe interne au réservoir, et définit avec cette tige une chambre à volume variable susceptible d'être sélectivement connectée à la source de gaz comprimé et à l'atmosphère pour respectivement fermer et ouvrir la sortie du réservoir. En outre, la tige est creuse ; elle communique en permanence avec la source de gaz sous pression et possède des lumières de communication de son volume interne avec le réservoir tandis que le clapet est conformé en une chemise dont la paroi est susceptible de recouvrir lesdites lumières lorsque le clapet est éloigné de son siège de manière, dans cette position, à isoler le réservoir de la source de gaz. Par ces moyens, on obtient aisément une ouverture rapide de la sortie du réservoir avec une section de passage qui est rapidement importante. Ces moyens permettent également une synchronisation mécanique simple du mouvement des différentes pièces mobiles pour aboutir à des alimentations et des échappements sous des fréquences relativement élevées, ce qui est nécessaire pour que le traitement d'un corps d'échange, par exemple, puisse être réalisé dans un temps compatible avec les exigences d'une exploitation industrielle d'une tour de réfrigération.

De manière avantageuse, le dispositif de l'invention comprendra une source de soufflage d'air chaud dirigée vers l'élément à traiter. Il pourra s'agir simplement d'un ventilateur destiné à réchauffer le matériau plastique formant le corps à détartrer en avant de la « campagne de tirs » lorsque celle-ci se déroule en continu par exemple.

On pourra enfin équiper le dispositif de l'invention d'une trémie de collecte des particules de tartre détachées par le traitement et retombant sous l'effet de la gravité, dans le cas notamment où on opère sous un packing horizontal. D'autres moyens de collecte tels que des aspirateurs par exemple, peuvent être mis en oeuvre avec le dispositif de l'invention.

D'autres caractéristiques et avantages de l'invention ressortiront de la description donnée ci-après d'un exemple de sa réalisation.

### BREVE DESCRIPTION DES DESSINS

Il sera fait référence aux dessins annexés parmi lesquels :
- la figure 1 est un schéma de principe d'un générateur d'ondes de choc mis en oeuvre dans l'invention,
- la figure 2 illustre la mise en oeuvre du procédé conforme à l'invention dans le traitement d'un packing horizontal.

### DESCRIPTION DETAILLEE DE L'INVENTION

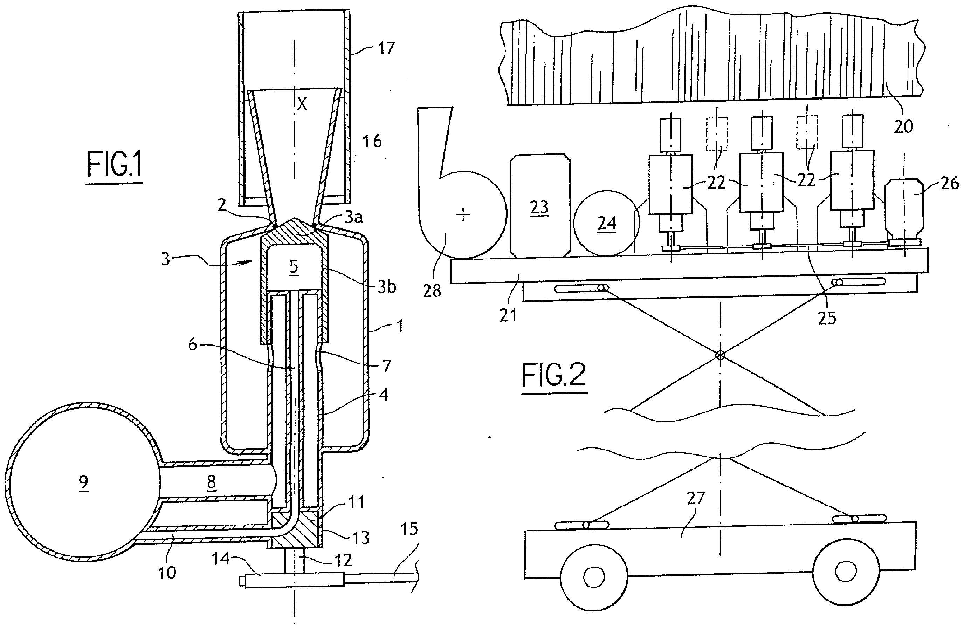

A la figure 1, on a représenté un réservoir 1 comportant une ouverture de sortie conformée en un siège 2 de clapet destiné à être obturé ou découvert par un clapet 3. Le réservoir est de forme généralement cylindrique avec un axe longitudinal X sur lequel est centré le siège. Il comporte le long de cet axe une tige fixe interne 4 réalisée sous la forme d'un tube fermé à son extrémité interne et traversant la paroi du réservoir, à l'opposé du siège 2. Le clapet 3 est quant à lui constitué par une chemise tubulaire 3b et une tête 3a surmontant la chemise, tête dont le profil est adapté à obturer de manière étanche le siège tout en offrant à la pression régnant à l'intérieur du réservoir une surface d'application annulaire autour du siège.

Le clapet 3 est monté coulissant sur la tige 4 et définit avec son extrémité fermée une chambre 5 à volume variable dans laquelle débouche un conduit 6, intérieur à la tige 4 et isolé du volume interne de cette dernière.

La paroi latérale de la tige 4 est pourvue d'une pluralité d'ouvertures 7 à un niveau tel qu'elles sont découvertes totalement par la chemise 3b lorsque le clapet 3 est en appui sur son siège et recouvertes par cette chemise lorsque le clapet 3 est écarté du siège 2.

A l'extérieur du réservoir 1, le volume intérieur de la tige 4 est relié par un conduit 8 à une source de pression 9 qui peut être une nourrice alimentée par un compresseur ou une ou une batterie de bouteilles de gaz (air) comprimé. Le conduit 6 est quant à lui relié à la même source 9 de gaz comprimé par l'intermédiaire d'un conduit 10 et d'une vanne à boisseau tournant 11 dont l'arbre de manoeuvre est noté 12 sur la figure. Dans la position représentée, la vanne établit la communication entre la source 9 et le conduit 6 donc la chambre 5. Dans une position opposée, après une manoeuvre d'un demi-tour du boisseau de la vanne 11, cette dernière isole la chambre 5 de la source de pression et la met en communication avec l'atmosphère au travers d'un orifice d'échappement 13 opposé au conduit 10. Le boisseau de la vanne est accouplé par son arbre de manoeuvre 12 à une roue dentée 14 qui appartient à une chaîne de transmission d'un mouvement rotatif issu d'un moteur non représenté sur cette figure et qui comporte par exemple une courroie crantée 15 d'entraînement de la roue 14. Dans un exemple non représenté, la vanne à boisseau tournant peut être remplacée par toute électrovanne appropriée.

On notera enfin sur cette figure la présence d'une tuyère 16 qui prolonge en divergeant l'orifice de sortie du réservoir 1. A l'extérieur de cette tuyère, l'appareil possède un manchon cylindrique 17 qui entoure et prolonge le débouché de la tuyère dans l'atmosphère.

Le fonctionnement du dispositif décrit ci-dessus est le suivant.

On considère que le premier état du dispositif est celui représenté à la figure 1. Dans cet état, la chambre 5 est remplie d'un gaz sous pression ce qui tend à plaquer le clapet 3 contre le siège 2 entourant l'ouverture de sortie du réservoir 1. Dans cette position, la jupe 3b du clapet est au dessus des ouvertures 7 et la chambre intérieure du réservoir 1 est en communication avec la source 9 de gaz sous pression.

Le boisseau 11 est entraîné en rotation, une rotation continue par exemple. Au cours de la première partie de cette rotation, la chambre 5 est isolée de la source 9 puis le canal interne du boisseau atteint l'orifice d'échappement 13. La chambre 5 est alors purgée et la pression qui règne à l'intérieur du réservoir 1 appliquée sur la surface annulaire du clapet extérieure au siège 2 n'est plus contrée par la pression qui règne dans la chambre 5. Le clapet est donc écarté du siège 2. La chambre intérieure du réservoir 1 est alors mise à l'atmosphère par l'orifice de sortie entouré du siège 2 pendant que la chemise 3b du clapet 3 vient recouvrir les orifices 7. La détente du gaz dans la tuyère 16 qui prolonge l'orifice de sortie est à l'origine de la formation d'un souffle qui se propage vers la sortie de la tuyère 16 dans l'axe X de l'appareil.

A l'intérieur de cette tuyère les écoulements de gaz conduisent à un abaissement de la pression et à la sortie de la tuyère 16 l'écoulement est canalisé par la présence du manchon 17, à l'intérieur duquel s'établit, par effet venturi, un écoulement tubulaire périphérique qui constitue un moyen de confinement de la divergence du flux à la sortie de la tuyère. L'écoulement gazeux à l'extérieur de la tuyère est donc maintenu sensiblement parallèle à l'axe X du dispositif.

La poursuite de la rotation du boisseau permet d'atteindre à nouveau l'état représenté de l'appareil. A ce moment, alors que la chambre 5 a été préalablement isolée de l'atmosphère, elle est à nouveau mise en communication avec la source de gaz 9. Le clapet 3 est alors plaqué à nouveau contre le siège 2, ce qui a pour effet, d'une part d'isoler la chambre intérieure du réservoir 1 de l'atmosphère et, d'autre part, ayant découvert les lumières 7, de connecter cette chambre à la source de gaz sous pression. Le cycle ainsi recommence tant que la roue dentée 14 est entraînée en rotation.

La figure 2 illustre par un schéma la mise en oeuvre d'une batterie d'appareils conformes à ceux décrits ci-dessus dans une opération de détartrage d'un corps d'échange 20 suspendu dans une tour de réfrigération par exemple d'une centrale électrique. Un bâti 21 porte une pluralité de générateurs 22 de souffle dont les tuyères sont tournées vers le haut, sous le corps d'échange 20. La distance H séparant l'ouverture de ces tuyères de l'extrémité inférieure du corps suspendu est de l'ordre de 15 à 30 cm. Le bâti porte également une source de gaz (air) sous pression formée ici par un compresseur 23 et une nourrice 24. Chaque générateur 22 possède une vanne à boisseau tournant accouplée à une chaîne de transmission 25 issue d'un moteur 26. Cette chaîne de transmission est ici constituée par une courroie entraînant toutes les roues dentées de commande des vannes en synchronisme. En ayant angulairement décalé chaque boisseau par rapport à tous les autres, on organise la succession dans le temps des « tirs » de chaque générateur ; par exemple, si le bâti porte six générateurs, un décalage angulaire de 60° entre boisseaux permet d'obtenir six tirs successifs pendant le temps d'une révolution d'un boisseau. Dans le cas d'un déclenchement par électrovanne, un automate se charge de l'exécution de la séquence.

Le bâti 21 est représenté monté sur une plateforme élévatrice (ou une grue) 27 qui peut être automotrice et qui permet d'ajuster la distance H séparant le corps d'échange 20 des tuyères. La vitesse de déplacement de la plateforme sous le corps d'échange est réglable par exemple autour de quelques centimètres à la seconde.

En fonctionnement, la libération du gaz sous pression, à chaque ouverture de clapet crée un souffle qui se propage dans les canaux formés dans le corps d'échange par de fines feuilles de PVC en déformant les éléments du corps d'échange et morcelant le dépôt à la surface desdits éléments. Le tartre déposé uniformément sur les feuilles de PVC est dur et cassant, son support formé par les fines feuilles de PVC est très souple, le tartre se casse et se morcelle donc lors de la déformation de son support sous l'effet de l'onde de choc. Une fois brisé, craquelé, le tartre est plus enclin à se désolidariser de son support.

De plus et dans le même temps le flux d'air balaie intensément l'ensemble des éléments volatiles contenus dans les canaux lors de son passage. Les morceaux de tartre dont la désolidarisation des feuilles de PVC a été amorcé par l'onde de choc sont alors balayés par le flux d'air et participent au nettoyage par abrasion des canaux.

Le dispositif représenté à la figure 2 comporte un dispositif de réchauffage du corps d'échange 20 représenté de manière schématique sous la forme d'une soufflante d'air chaud 28. Il est également prévu d'équiper l'ensemble supérieur d'un collecteur de tartre détaché sous la forme par exemple d'une trémie qui envelopperait le bâti 21 et qui n'est pas représentée pour ne pas nuire à la clarté du dessin. La sortie inférieure de cette trémie pourrait être reliée à un aspirateur.

Le procédé de l'invention et le dispositif utilisé pour le mettre en oeuvre, dans une forme adaptée différente de celle décrite aux figures, peut être utilisé pour traiter d'autres éléments entartrés tels que des packings latéraux, dans certaines formes de tours aéro-réfrigérantes ou les séparateurs de gouttes qui sont aussi mis en oeuvre dans ces tours pour minimiser la quantité de gouttes entraînées dans l'atmosphère par l'air sortant de la tour. Ces séparateurs ne sont pas des corps d'échange, ils forment plutôt des barrières physiques (chicanes) aux gouttelettes contenues dans le flux d'air qui nécessairement sont soumises à un entartrage moins important que les corps d'échange mais suffisant pour qu'à terme il faille les traiter afin de recouvrer leurs performances initiales.

## Revendications

1. Procédé de détartrage in-situ d'un corps élément (20) recouvert d'un dépôt, présent dans une tour de réfrigération par voie humide, le procédé consistant à engendrer au moins un souffle d'air en grande quantité et à faible pression par un générateur (22) mettant en oeuvre la détente d'une masse de gaz comprimée en direction d'une zone de l'élément pour créer un écoulement, dans cet élément, sensiblement parallèle aux surfaces des parois qui le constituent, le générateur étant ouvert à distance (H) de cette zone, **caractérisé en ce que** le souffle d'air provoque une déformation élastique des parois, et **en ce que** le procédé consiste à répéter cette opération après avoir déplacé le générateur le long de l'élément.

2. Procédé selon la revendication 1, **caractérisé en ce qu'**il consiste à déplacer le générateur en continu sous le corps d'échange et à émettre une succession de souffles pendant le déplacement.

3. Procédé selon la revendication 1 ou la revendication 2, **caractérisé en ce qu'**il comprend une phase de réchauffage de la zone concernée du corps par un courant d'air chaud.

4. Dispositif pour mette en oeuvre le procédé selon l'une des revendications précédentes, **caractérisé en ce que** le générateur susdit comporte:
- une source (9) de gaz comprimé,
- au moins un réservoir (1) communiquant en entrée avec ladite source (9) de gaz au travers d'une vanne (11) à ouverture et fermeture commandées et en sortie avec l'atmosphère extérieure au travers du siège (2) d'un clapet (3) à ouverture et fermeture commandées,
- des moyens de commande (12, 14) de la vanne et du clapet (3) pour isoler le réservoir (1) de l'atmosphère extérieure lorsqu'il est en communication avec la source (9) de gaz comprimé et pour l'isoler de la source (9) lorsqu'il est ouvert sur l'atmosphère extérieure.

5. Dispositif selon la revendication 4, **caractérisé en ce qu'**il est ouvert sur l'atmosphère extérieure par une tuyère (16) de guidage et de détente du flux d'air au-delà du siège de clapet susdit.

6. Dispositif selon la revendication 5, **caractérisé en ce que** l'extrémité libre de la tuyère (16) est située à l'intérieur d'un manchon cylindrique (17) écarté radialement de cette extrémité.

7. Dispositif selon l'une des revendications 4 à 6, **caractérisé en ce que** le clapet (3) est monté à coulissement sur une tige fixe (4) interne au réservoir {1) et définit avec cette tige une chambre (5) à volume variable susceptible d'être sélectivement connectée à la source (9) de gaz comprimé et à l'atmosphère pour respectivement fermer et ouvrir la sortie (2) du réservoir.

8. Dispositif selon la revendication 7, **caractérisé en ce que** la tige (4) est creuse, communique en permanence avec la source (9) de gaz sous pression et possède des lumières (7) de communication de son volume interne avec le réservoir (1) tandis que le clapet (3) est conformé en une chemise (3b) dont la paroi est susceptible de recouvrir lesdites lumières (7) lorsque le clapet (3) est éloigné de son siège (2) de manière, dans cette position, à isoler le réservoir (1) de la source de gaz (9).

9. Dispositif selon la revendication 7 ou la revendication 8, **caractérisé en ce que** la communication sélective de la chambre (5) à volume variable comporte une vanne rotative (11) dont l'axe est coaxial à celui (X) de la tige (4).

10. Dispositif selon le revendication 8, **caractérisé en ce qu'**il comprend une pluralité de réservoirs montées sur un bâti unique (21) supportant un dispositif d'entraînement unique (25,26) pour l'ensemble des vannes rotatives mises en oeuvre, chaque boisseau de vanne étant angulairement décalé par rapport à chacun des autres boisseaux de manière qu'un entraînement unique de tous les boisseaux conduise à une génération d'ondes de choc successives.

11. Dispositif selon l'une des revendications 4 à 10, **caractérisé en ce qu'**il comporte une source (27) de soufflage d'air chaud dirigée vers l'élément à traiter.

12. Dispositif selon l'une des revendications 4 à 11, **caractérisé en ce que**, lorsque l'élément est un corps de refroidissement horizontal, il comporte une trémie de recueil du tartre détaché du corps de refroidissement.

13. Dispositif selon la revendication 9, **caractérisé en ce que** la vanne rotative est une électrovanne.

## Patentansprüche

1. Verfahren zur In-situ-Entkalkung von einem mit einer Ablagerung überzogenen Elementkörper (20), der in einem Nasskühlturm vorhanden ist, wobei das Verfahren darin besteht, dass mindestens ein Luftstoß in großer Menge und mit geringem Druck mittels eines Generators (22) erzeugt wird, der die Ausdehnung einer Druckgasmasse in Richtung einer Zone des Elements verursacht, um in diesem Element eine Strömung zu erzeugen, die im Wesentlichen parallel zu den Oberflächen der es bildenden Wände ist, wobei der Generator in einem Abstand (H) zu dieser Zone offen ist, **dadurch gekennzeichnet, dass** der Luftstoß eine elastische Verformung der Wände hervorruft und dass das Verfahren darin besteht, dass dieser Vorgang wiederholt wird, nachdem der Generator entlang des Elements verschoben worden ist.

2. Verfahren nach Anspruch 1, **dadurch gekennzeichnet, dass** es darin besteht, den Generator kontinuierlich unter dem Austauschkörper zu verschieben und eine Folge von Luftstößen während der Verschiebung auszustoßen.

3. Verfahren nach Anspruch 1 oder Anspruch 2, **dadurch gekennzeichnet, dass** es eine Phase der Erwärmung der betreffenden Zone des Körpers durch einen Heißluftstrom umfasst.

4. Verfahren zum Durchführen des Verfahrens nach einem der vorhergehenden Ansprüche, **dadurch gekennzeichnet, dass** der oben genannte Generator umfasst:
- eine Druckgasquelle (9),
- mindestens einen Behälter (1), der am Einlass mit der genannten Gasquelle (9) durch ein Hahnventil (11) mit gesteuerter Öffnung und Schließung kommuniziert, sowie am Auslass mit der äußeren Atmosphäre durch den Sitz (2) eines Ventils (3) mit gesteuerter Öffnung und Schließung,
- Steuermittel (12, 14) zum Steuern des Hahnventils und des Ventils (3), um den Behälter (1) von der äußeren Atmosphäre zu isolieren, wenn er in Kommunikation mit der Druckgasquelle ist, und um ihn von der Quelle (9) zu isolieren, wenn er zur äußeren Atmosphäre hin offen ist.

5. Vorrichtung nach Anspruch 4, **dadurch gekennzeichnet, dass** sie zur äußeren Atmosphäre über eine Düse (16) zur Führung und Ausdehnung des Luftstroms über den oben genannten Ventilsitz hinaus offen ist.

6. Vorrichtung nach Anspruch 5, **dadurch gekennzeichnet, dass** sich das freie Ende der Düse (16) innerhalb einer zylindrischen Hülse (17) befindet, die radial zu diesem Ende beabstandet ist.

7. Vorrichtung nach einem der Ansprüche 4 bis 6, **dadurch gekennzeichnet, dass** das Ventil (3) verschiebbar an einer ortsfesten, im Behälter (1) befindlichen Stange (4) gelagert ist und mit dieser Stange eine Kammer (5) mit veränderlichem Volumen definiert, die dazu geeignet ist, selektiv mit der Druckgasquelle (9) und der Atmosphäre verbunden zu werden, um den Auslass (2) des Behälters zu schließen bzw. zu öffnen.

8. Vorrichtung nach Anspruch 7, **dadurch gekennzeichnet, dass** die Stange (4) hohl ist, dauerhaft mit der Druckgasquelle (9) in Verbindung steht und Öffnungen (7) zur Kommunikation zwischen ihrem Innenvolumen und dem Behälter (1) hat, während das Ventil (3) als Hülse (3b) geformt ist, deren W and geeignet ist, die genannten Öffnungen (7) abzudecken, wenn das Ventil (3) von seinem Sitz (2) entfernt ist, um in dieser Position den Behälter (1) von der Gasquelle (9) zu isolieren.

9. Vorrichtung nach Anspruch 7 oder Anspruch 8, **dadurch gekennzeichnet, dass** die selektive Kommunikation der Kammer (5) mit veränderlichem Volumen ein Drehhahnventil (11) umfasst, dessen Achse koaxial zu der Achse (X) der Stange (4) ist.

10. Vorrichtung nach Anspruch 8, **dadurch gekennzeichnet, dass** sie eine Vielzahl von Behältern umfasst, die auf einem gemeinsamen Gestell (21) angebracht sind, das eine einzige Antriebsvorrichtung (25, 26) für alle verwendeten Drehhahnventile trägt, wobei jeder Ventilkegel gegenüber jedem der anderen Kegel winkelversetzt ist, so dass ein einziger Antrieb für alle Kegel zu einer Erzeugung von aufeinanderfolgenden Stoßwellen führt.

11. Vorrichtung nach einem der Ansprüche 4 bis 10, **dadurch gekennzeichnet, dass** sie eine Heißluftblasquelle (27) umfasst, die auf das zu behandelnde Element gerichtet ist.

12. Vorrichtung nach einem der Ansprüche 4 bis 11, **dadurch gekennzeichnet, dass**, wenn das Element ein horizontaler Kühlkörper ist, es einen Trichter zur Aufnahme des von dem Kühlkörper abgelösten Kesselsteins umfasst.

13. Vorrichtung nach Anspruch 9, **dadurch gekennzeichnet, dass** das Drehhahnventil ein Magnetventil ist.

## Claims

1. Method for in situ descaling an element body (20) covered in a deposit, present in a wet cooling tower, the method consisting in generating at least one air blast of large quantity and low pressure by means of a generator (22) causing a mass of compressed gas to expand towards a zone of the element so as to create a flow in said element that is substantially parallel to the surfaces of the walls constituting it, the generator being open at a distance (H) from said zone, **characterised in that** the air blast causes elastic deformation of the walls, and **in that** the method consists in repeating said operation after moving the generator along the element.

2. Method according to claim 1, **characterised in that** it consists in moving the generator continuously under the exchange body and emitting a succession of blasts during the movement.

3. Method according to claim 1 or claim 2, **characterised in that** it includes a phase of heating the zone concerned of the body by a stream of hot air.

4. Device for executing the method according to any one of the preceding claims, **characterised in that** said generator comprises:
- a source (9) of compressed gas;
- at least one tank (1) having an inlet communicating with said gas source (9) through a cock (11) with controlled opening and closing, and an outlet communicating with the outside atmosphere via the seat (2) of a valve (3) with controlled opening and closing,
- means (12, 14) for controlling the cock and the valve (3) to isolate the tank (1) from the outside atmosphere while it is in communication with the compressed gas source (9), and to isolate it from the source (9) when it is open to the outside atmosphere.

5. Device according to claim 4, **characterised in that** it is open to the outside atmosphere via a nozzle (16) for guiding and expanding the stream of air beyond said valve seat.

6. Device according to claim 5, **characterised in that** the free end of the nozzle (16) is situated inside a cylindrical sleeve (17) radially spaced apart from said end.

7. Device according to any one of claims 4 to 6, **characterised in that** the valve (3) is mounted to slide on a fixed rod (4) inside the tank (1) and defines with said rod a variable-volume chamber (5) adapted to be selectively connected to the compressed gas source (9) and to the atmosphere for the purpose respectively of closing and opening the outlet (2) of the tank.

8. Device according to claim 7, **characterised in that** the rod (4) is hollow, communicates continuously with the source (9) of gas under pressure and possesses communication openings (7) between its inside volume and the tank (1), while the valve (3) is shaped as a jacket (3b) having a wall adapted to cover said openings (7) when the valve (3) is spaced apart from its seat (2) in such a manner that, in this position, it isolates the tank (1) from the gas source (9).

9. Device according to claim 7 or claim 8, **characterised in that** the selective communication with the variable-volume chamber (5) includes a rotary cock (11) the axis of which is coaxial with that (X) of the rod (4).

10. Device according to claim 8, **characterised in that** it includes a plurality of tanks mounted on a single frame (21) supporting a single drive device (25, 26) for all of the rotary cocks used, each plug of a cock being angularly offset from each of the other plugs so that a single drive for all of the plugs leads to successive shockwaves being generated.

11. Device according to any one of claims 4 to 10, **characterised in that** it includes a source (27) for blowing hot air towards the element that is to be treated.

12. Device according to any one of claims 4 to 11, **characterised in that** when the element is a horizontal cooling body, it includes a hopper for recovering the scale detached from the cooling body.

13. Device according to claim 9, **characterised in that** the rotary cock is a solenoid valve.
